## Europäisches Patentamt

## European Patent Office

## Office européen des brevets

(19)

(11) Publication number: **0 102 417**
**A1**

(12)

# EUROPEAN PATENT APPLICATION

(21) Application number: **82304456.5**

(22) Date of filing: **24.08.82**

(51) Int. Cl.³: **B 01 D 46/02**

(43) Date of publication of application:
**14.03.84** Bulletin **84/11**

(84) Designated Contracting States:
**AT BE CH DE FR GB IT LI LU NL SE**

(71) Applicant: **NEW-COME FILTERS LIMITED**
**93 London Road**
**LLeicester Leicestershire(GB)**

(72) Inventor: **Piggin, Peter Reginald**
**"Hollies" Main Street**
**Burton Overy Leicestershire(GB)**

(74) Representative: **Andrews, Robert Leonard et al,**
**HASELTINE LAKE & Co. Hazlitt House, 28 Southampton**
**Buildings Chancery Lane**
**London WC2A 1AT(GB)**

(54) A gas filter device.

(57) Particle-laden gas passes downwardly through an inlet duct into inlets of several wedge-shaped deceleration chambers formed by vertical plates radiating from a central region below the bottom of the inlet duct. The inner ends of the plates and the inlets of the chambers are vertically below the bottom of the inlet duct. In each chamber the gas first proceeds towards a particle exit at the bottom of the chamber, then reverses direction and passes upwardly into filter units above wider parts of the chamber, depositing some heavy particles near the particle exit. To purge the chambers and filter units, suction means are connected to an outlet duct and one or more inlets to the chambers are closed off from the inlet duct simultaneously with the particle outlet(s) of the same chamber(s) being opened to said outlet duct.

FIG. 6.

EP 0 102 417 A1

## A GAS FILTER DEVICE

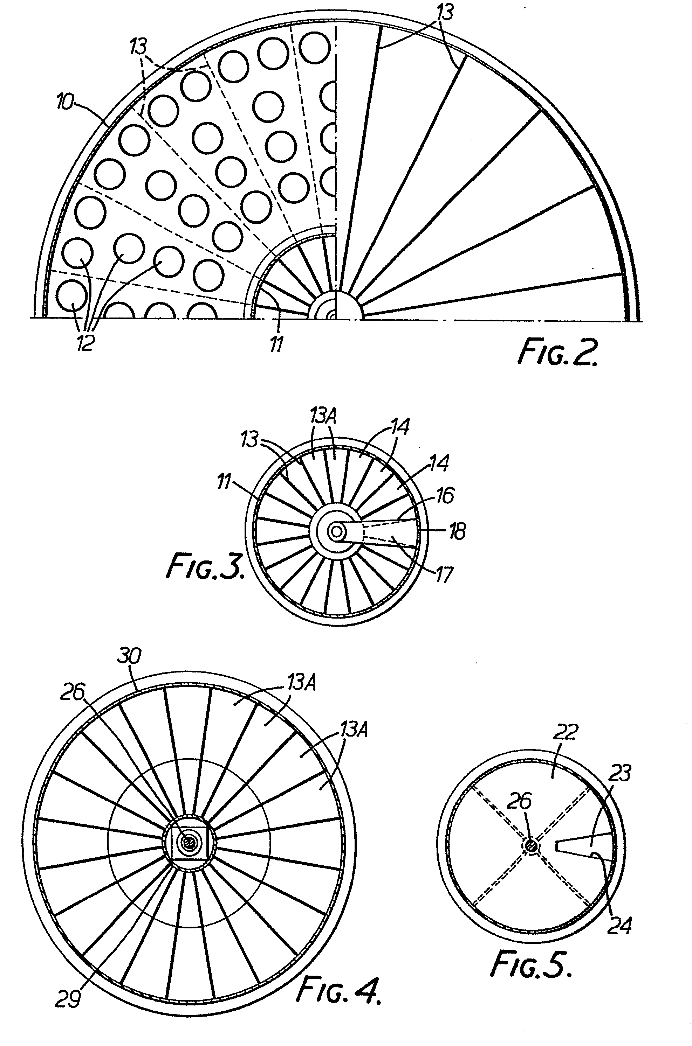

It has already been proposed - see Figure 3 of British Patent Specification No. 1462211 - to provide a filter device for removing particles from a particle-laden gas, said filter device comprising an inlet duct through which a particle-laden gas is passed downwardly, a plurality of filter units distributed about said inlet duct, a plurality of chambers distributed around the axis of the inlet duct and near the bottom of the inlet duct which receive, through inlets of the chambers, particle-laden gas from the inlet duct, each of said chambers having at its top a gas exit to at least one of the filter units and having at its bottom a removed particle exit, a first baffle mounted to be turned about a vertical axis for closing off said inlets successively and at least one at a time as said first baffle is turned, an outlet duct below the removed particle exits for carrying away particles removed from said chambers and filter units by suction means which can be coupled to said outlet duct, a second baffle mounted to be turned about a vertical axis for opening said particle exits at least one at a time to said outlet duct whilst the other particle exits are closed off from said outlet duct, and drive means for turning said first and second baffles in synchronism so that when the inlet of one chamber is closed off from said inlet duct the particle exit of the same chamber is opened to said outlet duct.

The gas filter device according to the present invention is as defined above but it is characterised in that said chambers are formed between vertical plates which radiate outwardly from a central region which is vertically below the bottom of the inlet duct, so that the chambers are wedge-shaped and their inner, narrow sides are vertically below the bottom of the inlet duct, the inlets of the chambers being at the tops of the inner sides of the chambers and vertically below the bottom of the inlet duct whereas the gas exits are at the tops of

wider parts of the chambers, whereby particle-laden gas entering each chamber first moves towards said removed particle exit and then substantially reverses its flow direction to exit through said gas exit, leaving behind some large particles at the bottom of the chamber, and in that said first baffle is above and adjacent said inlets.

The particle exits of a gas filter device according to the present invention are preferably vertically below the bottom of the inlet duct and preferably in each chamber there is a clear, unimpeded vertical passage from the inlet to the particle exit.

Preferably, in a gas filter device according to the present invention the outlet duct is fixed to the second baffle so as to turn with it.

In the gas filter device shown in Figure 3 of British Patent Specification No. 1462211 a number of horizontal connections, of undisclosed shape but possibly short pipes of circular cross-section, radiate outwardly from the side of the inlet duct at the bottom thereof and open into the chambers at vertical side walls thereof, near the tops of the chambers. It is true that the particle laden gas flows downwardly in the inlet duct and upwardly into the filter units but this is caused by two changes by 90° of the direction of gas flow, since the gas flows horizontally through the connections between the inlet duct and the chambers. The resultant reversal of flow of the gas would not result in precipitation here of a large number of particles and of those which are precipitated here many would lie on the bottom of the horizontal connections between the inlet duct and the chamber and would be difficult to remove with the aid of the suction means.

It is an object of the present invention to improve the gas filter device according to the above-mentioned prior proposal, both as regards precipitation of particles before the gas enters the filter units and as regards purging the device of the particles which are precipitated here.

With the device according to the present invention, having the characteristic features specified above, the particle-laden gas enters the chambers, preferably vertically, and then flows downwardly in them a much greater distance than would be possible in the case of the earlier proposal mentioned above, and it decelerates as it flows downwardly and then flows upwardly into the filter units, leaving behind at the bottom of each chamber, which in this case may rightly be called a deceleration chamber, more particles than would be the case with the prior proposal. These particles would not be difficult to remove by the suction means in the case of the present invention, especially if they fall through the particle exits and on to the second baffle.

Two examples in accordance with the present invention are described below with reference to the accompanying drawings, in which:

Figure 1 shows a diagrammatic side view of the lower portion of a gas filter device,

Figures 2 to 5 show sectional views of the same device, taken as indicated by the arrows A, B, C and D, respectively, of Figure 1, and

Figure 6 shows diagrammatically a second gas filter device.

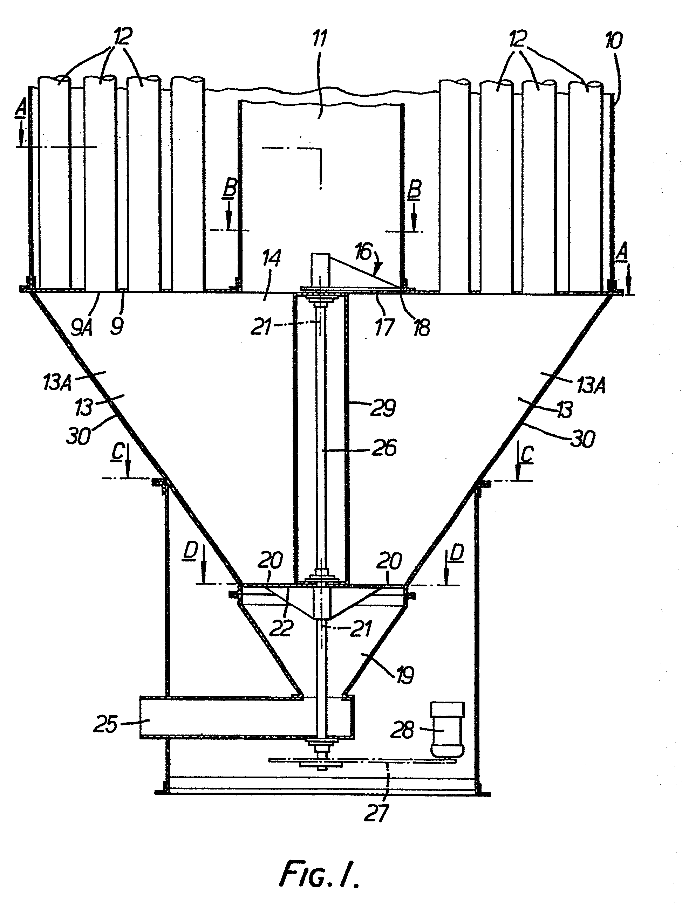

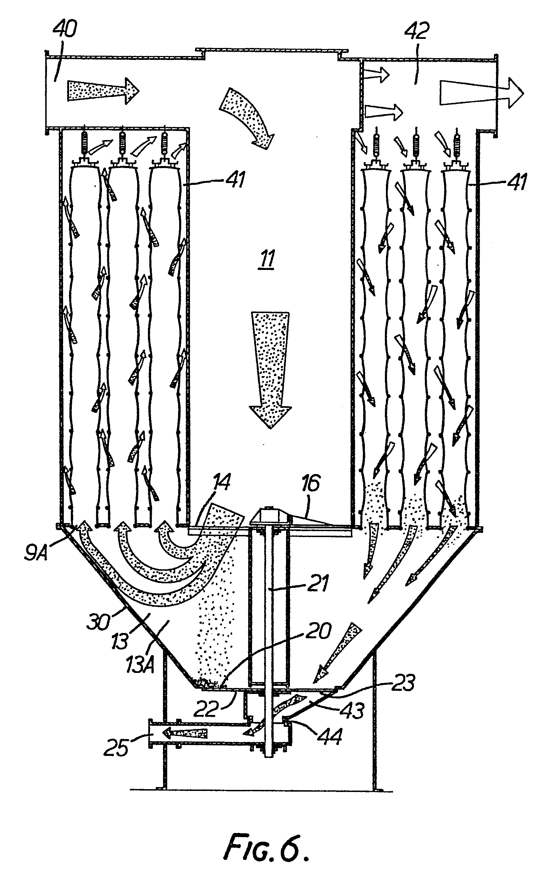

Figure 1 shows the lower end of a vertical, metallic inlet duct 11, of circular cross-section, for particle-laden gas which flows downwardly in the duct. The duct is surrounded by a circular sheet metal wall 10 and a horizontal metal plate 9 is secured to the lower ends of the duct 11 and the wall 10, this having a large hole through its centre, registering with the duct 11, and several holes 9A through it registering with entrance openings at the lower ends of filter units 12. These filter units are distributed around the axis of the inlet duct 11 and they are in the form of tubular bags closed at their upper ends and suspended from above as shown diagrammatically in Figure 6.

A number of vertical metal plates 13 radiate from and abut a vertical tube 29, the axis 21 of which is also the axis of the duct 11, and they abut a frusto-conical sheet metal wall 30. Therefore between each two adjacent walls 13 there is formed a wedge-shaped chamber 13A and these chambers are distributed around the axis of the inlet duct 11 and near the bottom of the inlet duct and they radiate outwardly from a central region, where the tube 29 is situated, which is vertically below the bottom of the inlet duct 11. The inner, narrow, sides of the chambers 13A are vertically below the bottom of the inlet duct 11 and at the tops of these sides of the chambers 13A there are inlets 14 to these chambers, these also being vertically below the bottom of the inlet duct 11, which means that a vertical line passing through an inlet 14 also passes along the interior of the duct 11. There is no special construction of the inlets 14; looking downwardly through the duct 11 one merely sees the upper edges of the plates 13, apart from a baffle 16. This baffle 16 is mounted to be turned stepwise about the axis 21 and it has a horizontal portion 17 which moves above and adjacent the inlets 14, completely closing one of them at a time, as shown in Figure 3, or two or more at a time. A knife-edge 18 at the periphery of the baffle 16 sweeps around the bottom of the duct 11.

At the bottom of each chamber 13A there is a particle exit 20 from the chamber, substantially all of this exit being vertically below the bottom of the inlet duct 11. Again, there is no special construction of these exits; looking upwardly at them one merely sees the lower edges of the plates 13. A manifold 19 is secured to the wall 30 and is connected via a pipe 25 to suction means (not shown) for purging the chambers 13A and filter units 12 of particles removed from the gas. A baffle 22 below and adjacent the particle exits 20 is mounted to be turned stepwise about the axis 21 and it is in the form of a disc with a wedge-shaped cut-out 23 which opens one of the particle exits 20 to the manifold 19 whilst the other particle exits 20 are all closed off from the manifold by the baffle 22. The baffle could be modified to open two or more of the particle exits to the manifold. The edge 24 of the cut-out 23 which is the leading edge when the baffle 22 turns is formed as a knife-edge.

The baffles 16 and 22 are mounted on a rod 26, which passes through the tube 29, and are driven stepwise in synchronism by a mechanism which includes a motor 28, a chain 27 and a ratchet arrangement not shown, the result being that when the inlet 14 of one chamber 13A is closed, the particle exit 20 of the same chamber is open so that particles can be sucked, through the pipe 25 and the manifold 19, out of that chamber and out of the filter units 12 which communicate with it.

Figure 6 shows a similar filter device and parts corresponding to those shown in Figures 1 to 5 are similarly numbered. In both examples, particle-laden air reaches the inlet duct 11 through another duct 40 and cleaned air passes through the filter units 12 into a space 41 and leaves the filter device via a duct 42.

In the device shown in Figure 6, instead of using a manifold 19 as the outlet duct, there is used an outlet duct 43 which is fixed to the baffle 22 and rotates with it, this being coupled via a swivel joint 44 to the fixed pipe 25. This arrangement enables the vertical height of the filter device to be reduced.

As shown in the left-hand half of Figure 6, when the inlet 14 to one of the chambers 13A is open and the particle exit 20 of that chamber is closed, particle-laden gas flows downwardly through the inlet duct 11 and the inlet 14 into the chamber 13A, where it decelerates, substantially reverses direction and flows upwardly through a gas exit 9A at the top of a wider part of the chamber into the filter units 12 which are vertically above that chamber. Some larger particles are precipitated in the chamber and fall to its bottom, passing through the particle exit and falling on the baffle 22 and staying there until the cut out portion 23 comes round to that chamber. Smaller particles are carried into the filter units and form a layer on the insides of the bags, whilst cleaned air passes through the fabric of the bags and into the space 41.

In the case of the chamber 13A the inlet 14 of which is closed by the baffle 16 and the particle exit 20 of which is open, particles are sucked out of the bags and the chamber through the manifold 19 or the outlet duct 43 as shown in the right-hand half of Figure 6.

Each chamber 13A could serve any convenient number of filter units 12, possibly only one.

CLAIMS:

1. A filter device for removing particles from a particle-laden gas, said filter device comprising an inlet duct through which a particle-laden gas is passed downwardly, a plurality of filter units distributed about said inlet duct, a plurality of chambers distributed around the axis of the inlet duct and near the bottom of the inlet duct which receive, through inlets of the chambers, particle-laden gas from the inlet duct, each of said chambers having at its top a gas exit to at least one of the filter units and having at its bottom a removed particle exit, a first baffle mounted to be turned about a vertical axis for closing off said inlets successively and at least one at a time as said first baffle is turned, an outlet duct below the removed particle exits for carrying away particles removed from said chambers and filter units by suction means which can be coupled to said outlet duct, a second baffle mounted to be turned about a vertical axis for opening said particle exits at least one at a time to said outlet duct whilst the other particle exits are closed off from said outlet duct, and drive means for turning said first and second baffles in synchronism so that when the inlet of one chamber is closed off from said inlet duct the particle exit of the same chamber is opened to said outlet duct, characterised in that said chambers (13A) are formed between vertical plates (13) which radiate outwardly from a central region (29) which is vertically below the bottom of the inlet duct (11), so that the chambers (13A) are wedge-shaped and their inner, narrow sides are vertically below the bottom of the inlet duct (11), the inlets (14) of the chambers (13A) being at the tops of the inner sides of the chambers and vertically below the bottom of the inlet duct (11) whereas the gas exits (9A) are at the tops of wider parts of the chambers (13A), whereby particle-laden gas entering each chamber (13A) first moves towards said removed particle exit (20) and then substantially reverses its flow direction to exit through said gas exit (9A), leaving behind some large particles at the bottom of the chamber (13A), and in that said first baffle (16) is above and adjacent said inlets (14). .

2.      A filter device according to claim 1 characterised in that the particle exits (20) are vertically below the bottom of the inlet duct (11).

3.      A.filter device according to claim 2 characterised in that there is a clear, unimpeded vertical passage in each chamber (13A) from the inlet (14) to the particle outlet (20) of that chamber.

4.      A filter device according to any preceding claim characterised in that the outlet duct (11) is fixed to the second baffle (22) so as to turn with it.

5.      A filter device according to any preceding claim characterised in that the outer sides of all the chambers (13A) are formed by a frusto-conical wall (30).

FIG. 1.

FIG. 2.

FIG. 3.

FIG. 4.

FIG. 5.

FIG.6.

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | GB-A-2 092 910 (AIR POLLUTION HOLDINGS LTD.)<br>* Whole document * | 1-5 | B 01 D 46/04 |
| D,A | GB-A-1 462 211 (STORK AMSTERDAM B.V.)<br>* Claims 1-5; figures 1-3 * | 1 | |
| A | FR-A-2 234 026 (CLARKE'S SHEET METAL INC.)<br>* Figures 1-5; page 3, line 3 - page 7, line 16 * | 1,2,5 | |
| A | GB-A-2 072 527 (P.R. PIGGIN "HOLLIES")<br>* Whole document * | 1,5 | |

TECHNICAL FIELDS SEARCHED (Int. Cl. ³)

B 01 D 46/00

The present search report has been drawn up for all claims

| Place of search | Date of completion of the search | Examiner |
|---|---|---|
| THE HAGUE | 15-08-1983 | BOGAERTS M.L.M. |